# EUROPEAN PATENT SPECIFICATION

(11) **EP 4 151 294 B1**
(45) Date of publication and mention of the grant of the patent: **10.07.2024**
(21) Application number: 22190681.1
(22) Date of filing: 17.08.2022
(51) Int. Cl.: A63F 13/98, A63F 13/24

(54) **ACCESSORY FOR IMPROVING PERFORMANCE OF GAMING CONTROLLERS**
ZUBEHÖR ZUR VERBESSERUNG DER LEISTUNG VON SPIELSTEUERUNGEN
ACCESSOIRE POUR AMÉLIORER LES PERFORMANCES DES CONTRÔLEURS DE JEU

(30) Priority: 27.08.2021 US 202117459364
(43) Date of publication of application: 22.03.2023
(73) Proprietor: Coady, James, 75008 Paris (FR)
(72) Inventor: Coady, James, 75008 Paris (FR); Stokes, Simon, Abbeyleix, R32KH9 (IE); Sappinen, Sara, 75008 Paris (FR)
(74) Representative: Hentrich Patent- & Rechtsanwaltspartnerschaft mbB

(56) References cited:
- WO-A1-2018/226789
- US-A1- 2017 106 274
- US-B1- 7 993 203

## Description

### TECHNICAL FIELD

The present disclosure is related to the field of video game controllers. More particularly, the present disclosure is related to accessories for improving the efficiency of gaming controllers.

### BACKGROUND

Input devices such as joysticks and analog sticks are used as controllers for playing video games. Input devices such as game controllers may allow users to interact with a video game or other graphical application running on a computing device, video game console, or other related gaming platforms. Buttons and pivotable controllers provided in such devices maybe used to perform various actions by the user. While buttons working on the principle of compression may be configured for performing some actions, pivotable controllers/analog sticks may be tilted to perform other actions. In one example, in a first person shooting video game, a set of buttons may be pressed for triggering one or more weapons while a pivotable controller may be tilted to various angles to allow movement of the character and aim of the weapon. Typically, a modem gaming controller may have a combination of buttons and pivoting controllers or analog sticks to perform various actions.

Analog sticks used in gaming controllers may generally be provided in gaming controllers by connecting one end to a pivot point housed inside the controller. The other end may be operated by the user by tilting the analog stick to various angles. A user who plays a video game using such gaming controller may use such controls over a period of time to gain mastery and accuracy over the actions performed in the game. The components of the gaming controller such as analog sticks (also known as "pivotable controls" and "tiltable posts" and "control sticks") maybe highly sensitive. While buttons provided in the controllers may provide merely a single operation (signal is sent upon pressing, no signal is sent otherwise), analog sticks may be configured to send a wide range of signals to the gaming console. The pressure, speed, and angle of movement may be monitored continuously and appropriate signals may be transmitted to the console. Hence, gaining mastery over the operation of such controllers may also be complex and time-consuming.

The technical problem of improving efficiency of such analog sticks and the problem of providing better control over such controllers are well known in the field of art. Several solutions have been proposed to solve these technical problems, some of which are listed below.

US7993203B1 discloses a control mechanism adapter for a game console having a circular base with an upper surface, an under surface, and a central opening, wherein the central opening allows a user's finger to rest directly on the control mechanism of a game console. There are legs on the under surface of said base, and attachment elements on the legs to attach the base to a control mechanism of a game console. The base has two raised control elements on the upper surface and on opposing sides of the base. The open center allows the user's thumb to rest on the same standard control geometry that the user is accustomed to using. The user has the option to press against the raised elements, either laterally or with the tip of the thumb. The raised element feature allows the user to manipulate the control lever with less downward muscular force and with improved dexterity.

US10561935B2 discloses a thumbstick for a user input device. The thumbstick comprises a tiltable post operable to output a control signal based on its position, with the post comprising external threads and a post anchor feature. An adjustable tensioning mechanism is configured to modify a tilt tension of the post. A cap comprises a cylindrical stem that defines a cavity. A base is moveable with the post and comprises a first cylindrical portion extending into the cavity, and a second cylindrical portion comprising internal threads and a base anchor feature. The internal threads mate with the external threads of the post to fasten the post to the base, and the base anchor feature abuts the post anchor feature to prevent displacement of the base toward the proximal end of the post.

US9943757B2 discloses a thumbstick for a user input device comprising an adjustable tensioning mechanism configured to modify a tilt tension of a tiltable post. The tiltable post is operable to output a control signal based on a position of the tiltable post relative to a default position. The thumbstick comprises a cap with a cylindrical stem that defines a cavity. An engagement body is located within the cavity and contacts an engagement surface of the adjustable tensioning mechanism. The engagement body includes a cam surface disposed around an axis of the tiltable post. An adjustment body within the cavity of the stem comprises a follower that contacts the cam surface. The follower is configured to traverse the cam surface when the cap is rotated to thereby translate the engagement body along the axis of the tiltable post and adjust the tilt tension of the tiltable post.

US9764230B2 discloses a user input device that includes a thumbstick that comprises a thumbstick module and a thumbstick cap that is connected thereto. The thumbstick cap includes a thumbstick base that is mounted upon the thumbstick module and a thumbstick top that can be removably connected to the thumbstick base. The manner of interconnection between the thumbstick top and the thumbstick base is such that a user can connect and disconnect the two components without having to disassemble the game controller and without having to use any tools.

The publication US 2017 / 1062744 A1 discloses a joystick cover for a joystick.

The joystick cover is variably attachable and detachable.

A joystick cap body of the joystick cover is directly attached to the joystick, the joystick cap body encompasses the joystick.

The joystick cap body is formed out auf elastomeric material such as silicone and natural or synthetic rubber, thereby the joystick cap body can return to its original shape after being temporarily deformed while being attached to a joystick.

In the publication US 7 993 203 B1 a control mechanism adapter for a game console is disclosed.

It has a circular base with an upper surface, and a central opening, wherein the central opening allows a user's finger to rest directly on the control mechanism of a game console.

In the publication WO 2018 / 226789 A1 a thumb grip cover for an analog controller stick is shown.

The thumb grip contains a top deformable insert and a bottom deformable insert which are located between the top surface the side walls and the bottom surface. The deformable inserts surround the controller stick.

The cited prior arts provide mechanisms to improve gaming controllers by providing various technical solutions. It may be noted that most of the solutions provided herein are to be implemented directly while manufacturing the gaming controller. While some solutions are not plug-and-play, others have the drawback of being too complex to design and manufacture.

Hence, there is a need for a simple yet useful mechanism that allows users to improve their control over gaming controllers.

### SUMMARY

The invention is defined by the appended claims.

In light of the disadvantages mentioned in the previous section, the following summary is provided to facilitate an understanding of some of the innovative features unique to the present invention and is not intended to be a full description. A full appreciation of the various aspects of the invention can be gained by taking the entire specification and drawings as a whole.

Embodiments described herein discloses an apparatus for improving the performance of gaming controllers. The apparatus disclosed herein is a gaming controller accessory that may be mounted onto analog sticks/pivotable controls/tiltable posts of gaming controllers. The apparatus may be mounted onto any pressure-sensitive control to improve a user's control and mastery over gaming controller. The gaming controller accessory may essentially comprise a base clip removably mounted on top of an analog stick of a gaming controller, a finger pad mounted on top of the base clip wherein the finger pad is tiltable to a plurality of angles with respect to the base clip, a gripping surface fixed on top of the finger pad, and a compression device disposed between the base clip and the finger pad. The tensile force provided by the compression device while tilting and moving the finger pad across a plurality of angles provides better control and feedback to the user while operating the gaming controller.

This summary is provided merely for purposes of summarizing some example embodiments, to provide a basic understanding of some aspects of the subject matter described herein. Accordingly, it will be appreciated that the above-described features are merely examples and should not be construed to narrow the scope or spirit of the subject matter described herein in any way. Other features, aspects, and advantages of the subject matter described herein will become apparent from the following detailed description and figures.

The abovementioned embodiments and further variations of the proposed invention are discussed further in the detailed description.

### BRIEF DESCRIPTION OF THE DRAWINGS

Figure 1A is an exemplary depiction of a top perspective view 100A of the gaming controller accessory mounted on an analog stick of a gaming controller according to the embodiments of the present disclosure;
Figure 1B is an exemplary depiction of a side-view 100B of the gaming controller accessory mounted on an analog stick of a gaming controller according to the embodiments of the present disclosure;
Figures 2 is an exemplary depiction 200 of the gaming controller accessory in a first configuration according to the embodiments of the present disclosure;
Figures 3 is an exemplary depiction 300 of the gaming controller accessory in a second configuration according to the embodiments of the present disclosure;
Figures 4A is an exemplary depiction 400A of an analog stick of a gaming controller with a user's finger in resting position according to the embodiments of the present disclosure;
Figures 4B and 4C are exemplary depictions 400B and 400C of an analog stick of a gaming controller in two different configurations according to the embodiments of the present disclosure;
Figures 5A and 5B are exemplary depictions of the top perspective views 500A and 500B of a base clip of the gaming controller accessory according to the embodiments of the present disclosure;
Figure 5C is an exemplary depiction of the bottom perspective view 500C of a base clip of the gaming controller accessory according to the embodiments of the present disclosure;
Figure 6A is an exemplary depiction of the top perspective view 600A of a finger pad of the gaming controller accessory according to the embodiments of the present disclosure;
Figure 6B is an exemplary depiction of the bottom perspective view 600B of a finger pad of the gaming controller accessory according to the embodiments of the present disclosure;
Figure 7 is an exemplary illustration 700 of a gripping surface according to the embodiment of the present disclosure;
Figure 8 is an exemplary illustration 800 of the order in which the finger pad, compression device, and the base clip are to be connected according to the embodiments of the present disclosure;
Figure 9 is an exemplary explosive view 900 of the components of the gaming controller accessory according to the embodiments of the present disclosure;
Figure 10A and 10B are exemplary illustrations of a top perspective view 1000 and a side view 1100 of the gaming controller accessory with extension springs according to an embodiment of the present disclosure;
Figure 11 is an exemplary illustration 1100 of the order in which the finger pad, the extension springs, and the base clip are to be connected according to the embodiments of the present disclosure;
Figure 12 is an exemplary explosive view 1200 of the components of the gaming controller accessory using extension springs according to the embodiments of the present disclosure;

The drawings described herein are for illustration purposes only and are not intended to limit the scope of the present subject matter in any way.

### DETAILED DESCRIPTION

In the following description of the embodiments of the invention, reference is made to the accompanying drawings that form a part hereof, and in which are shown by way of illustration specific embodiments in which the invention may be practiced. These embodiments are described in sufficient detail to enable those skilled in the art to practice the invention, and it is to be understood that other embodiments maybe utilized and that changes may be made without departing from the scope of the present invention. The following detailed description is, therefore, not to be taken in a limited sense, and the scope of the present invention is defined only by the appended claims.

The specification may refer to "an", "one" or "some" embodiment(s) in several locations. This does not necessarily imply that each such reference is to the same embodiment(s), or that the feature only applies to a single embodiment. A single feature of different embodiments may also be combined to provide other embodiments.

As used herein, the singular forms "a", "an" and "the" are intended to include the plural forms as well, unless expressly stated otherwise. It will be further understood that the terms "includes", "comprises", "including" and/or "comprising" when used in this specification, specify the presence of stated features, integers, steps, operations, elements and/or components, but do not preclude the presence or addition of one or more other features integers, steps, operations, elements, components, and/or groups thereof. As used herein, the term "and/or" includes any and all combinations and arrangements of one or more of the associated listed items.

Unless otherwise defined, all terms (including technical and scientific terms) used herein have the same meaning as commonly understood by one of ordinary skill in the art to which this disclosure pertains. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The present disclosure proposes an apparatus for improving the performance of gaming controllers. The apparatus disclosed herein is a gaming controller accessory that may be mounted onto analog sticks/pivotable controls/tiltable posts/control sticks of gaming controllers. The apparatus may be mounted onto any analog stick of a gaming controller to improve the user's control and mastery over gaming controller. The gaming controller accessory essentially comprises a removable base clip mounted on top of an analog stick of a gaming controller, a finger pad mounted on top of the base clip wherein the finger pad is tiltable to a plurality of angles with respect to the base clip, a gripping surface fixed on top of the finger pad, and a compression device disposed between the base clip and the finger pad. The tensile force provided by the compression device while tilting and moving the finger pad across a plurality of angles, the concave movement of the user's thumb while operating the accessory, and the form factor of the gripping surface provides better control of the analog stick to a user.

Throughout this document, the term "analog sticks", "pivotable controllers", "tiltable posts", and "control sticks" may be used interchangeably while referring to the control stick of the gaming controller onto which the proposed apparatus is mounted. The terms "gaming controller accessory", and "accessory" may be used interchangeably while referring to the apparatus disclosed herein. The term "gaming controller" may refer to any controller (for example, joysticks, thumb sticks, and the like) that are generally used with gaming consoles for providing input signals. It may be noted that the terms used herein do not restrict the scope of the present subject matter. The terms are used interchangeably depending on the context of the sentence.

The accessory proposed by the present disclosure provides better control over the analog sticks by providing better feedback and control to the user. The compression device disposed between the base clip and the tiltable finger pad may provide superior control and feedback to the user compared to analog sticks provided in conventional gaming controllers. The primary advantage of the proposed solution over conventional analog sticks is that they provide uninterrupted contact between the user's thumb and the controller by avoiding slippage caused by partial contact of the user's finger/thumb on the analog stick.

Herein, the combination of various components of the accessory such as the gripping material, the tiltable finger pad, the compression device, and the base clip provide a comprehensive solution to issues such as loss of control caused by partial gripping of the analog stick. The apparatus further provides better feedback of the analog stick by means of its increased sensitivity. Furthermore, the accessory increases the life span of the analog stick and the gaming controller itself since most of the pressure is absorbed by the accessory thereby reducing wear and tear.

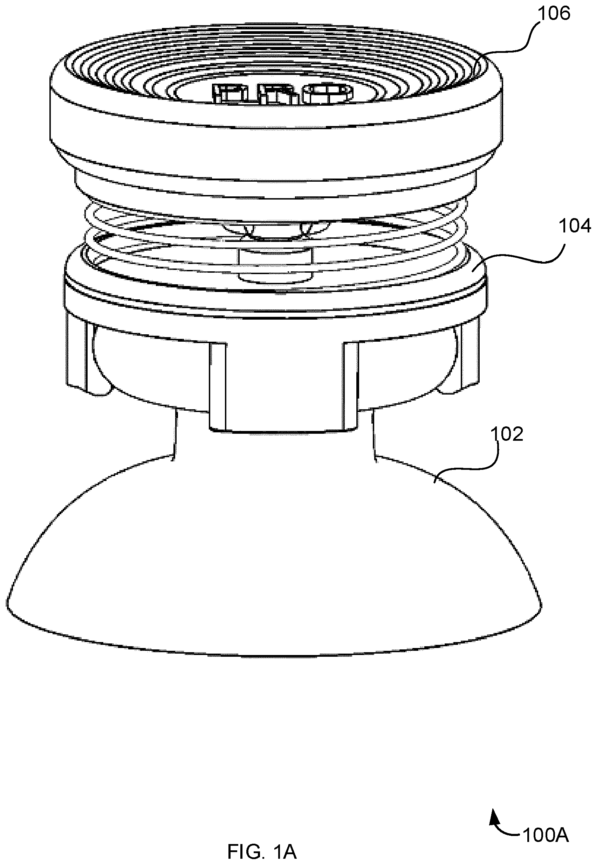

Before moving to the succeeding sections of this disclosure that describes the working of the apparatus in detail, it is pertinent to refer to various reference numbers provided in the drawings. Figure 1A is an exemplary depiction of a top perspective view 100A of the gaming controller accessory mounted on an analog stick of a gaming controller. Herein, the accessory is mounted on the analog stick 102 of the gaming controller using the base clip 104. A gripping surface 106 is provided on the top most part of the accessory above the finger pad.

The gripping surface 106 may have a raised form factor along its circumference while it caves in on its central portion. A user's thumb may comfortably rest within the caved section of the gripping surface 106. The caved structure provides better control and grip for the user's thumb. Furthermore, the gripping material may be manufactured using any material that reduces slippage such as materials made of rubber or other related material. The surface of this material may further be provided with grooves or embossing patterns to increase the gripping factor.

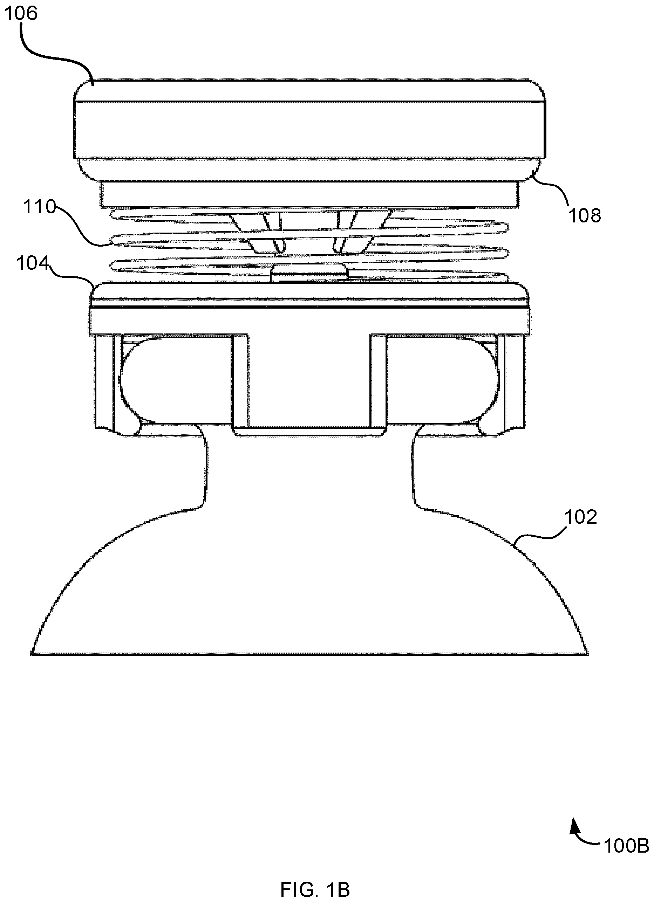

Referring to figure 1B, an exemplary depiction of a side-view 100B of the gaming controller accessory mounted on an analog stick of a gaming controller is provided. The side view provides a more comprehensive view into all the primary components of the accessory. Herein, the accessory is mounted on an analog stick 102 of a gaming controller device using a base clip 104. The base clip 104 may have a connector on its bottom portion to clip onto the analog stick 102. The top portion of the base clip 104 may have a notch extending out of its central portion. The top end of the notch may further have a spherical shaped connector that allows the finger pad 108 to be tiltably connected to the base clip 104.

The finger pad 108 may further have a pivotable connector at its bottom side. The pivotable connector allows the finger pad 108 to be pivotable and tiltably connected to the base clip 104. The pivotable connector provided on the bottom portion of the finger pad is connected to the spherical shaped connector extending outward from the notch of the base clip 104. The connecting mechanism between the spherical connector of the base clip 104 and the pivotable connector of the finger pad 108 may be comparable to a ball and socket joint. A compression device 110 may be disposed between the base clip 104 and the finger pad 108 for providing a tensile force between them. The gripping surface 106 may be mounted on top of the finger pad 108 to further enhance the gripping provided by the accessory.

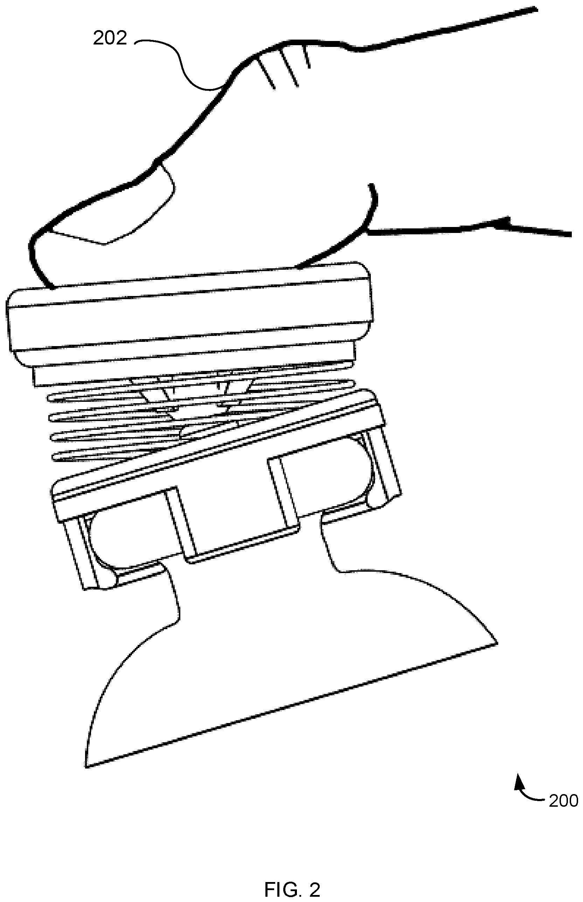

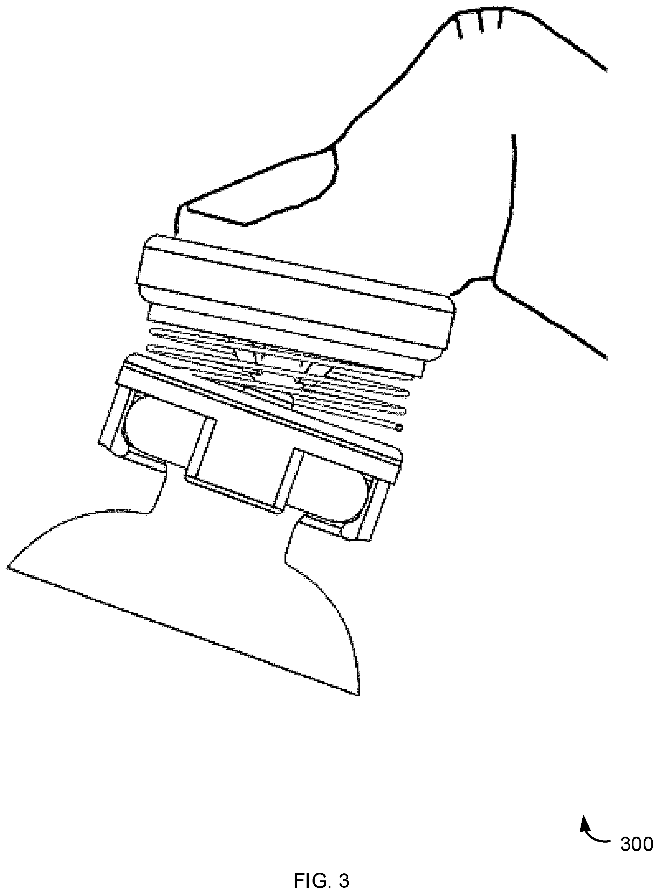

Figures 2 is an exemplary depiction 200 of the gaming controller accessory in a first configuration while figure 3 is an exemplary depiction 300 of the gaming controller accessory in a second configuration according to the embodiments of the present disclosure. Herein, the user's thumb 202 resting on the gripping surface 106 never loses contact of the accessory even when the accessory is tilted at various angles. Herein, the thumb 202 never slips out of place or reaches a partial-contact state even when the user moves/tilts the finger pad 108 at various angles.

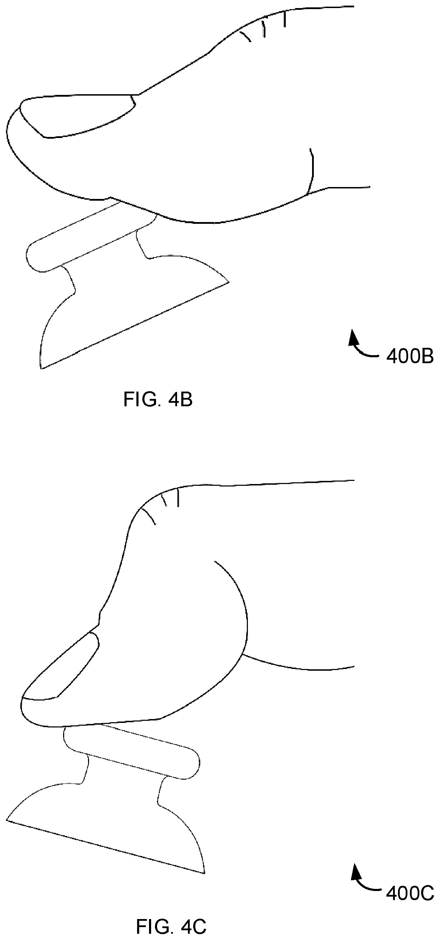

When the user's thumb 202 is directly in contact with the analog stick 102, the thumb 202 may undergo movement in a convex pattern causing the thumb 202 to be in partial-contact state many a times. In such a scenario, the thumb may rest merely on the edges of the analog stick 102 thereby making it difficult for the user to control the movement of the analog stick 102. Furthermore, partial contact increases the chances of the analog stick 102 slipping from the user's thumb 202 and may further reduce the response time of the user. Figures 4B and 4C illustrate this problem. In the present disclosure, the compression device 110 and the pivotable connection between the base clip 104 and the finger pad 108 may provide better control and feedback to the user while gaming. Herein, instead of a convex movement, the thumb 202 may undergo movement in a concave pattern which may reduce the instance of the thumb 202 slipping out of place during the gaming process as depicted in figures 2 and 3.

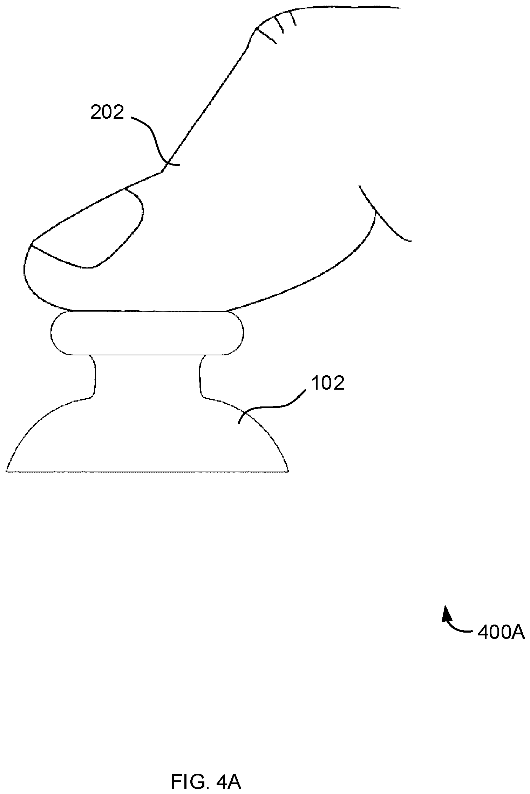

Figures 4A is an exemplary depiction 400A of an analog stick of a gaming controller with a user's thumb 202 in resting position. The analog stick 102 may be connected to a pivot point provided within the housing of the gaming controller. The analog stick 102 may be moved/tilted through a plurality of angles and directions to generate a plurality of control signals. The analog stick 102 may be configured to provide a plurality of signals depending on its angle, speed of movement, pressure applied, and the like. The signals are generated continuously and are transmitted to a gaming console to which the gaming controller is connected. The character in the video game may behave according to the movements made on the analog stick 102.

Some gaming consoles allow users to tune the sensitivity of various controls of the gaming controller including that of the analog stick 102. Sensitivity generally ranges from soft to hard depending on the user's preference. A user may pre-set a sensitivity level and may train with gaming controller to gain mastery over the movements and actions of the character in a video game. Often it takes time and effort to master the controls of the gaming controller and hence users may prefer a specific gaming controller over the other since mastering a new controller may require additional effort. The disadvantages of inbuilt analog sticks may include lack of adequate sensitivity, lack of adequate feedback, chances of getting into partial finger contact position, slippage, wear and tear, and the like.

Figures 4B and 4C are exemplary depictions 400B and 400C of an analog stick of a gaming controller in two different configurations. These configurations depict the analog stick in partial contact state with the user's thumb 202. The user's thumb 202 herein may move in a convex pattern causing the analog stick to slip out of place. Many a times, the user's thumb may touch merely a small portion such as an edge of the analog stick thereby reducing the user's control over the analog stick.

The base clip 104 may act as the interfacing component between the analog stick 102 and the gaming control accessory described herein. The base clip 104 may be removably clipped onto the analog stick 102 using a connector provided on its bottom side. The connector provided on the bottom portion of the base clip 104 may be referred as a "first connector" for the purpose of convenience and easier reference throughout this document.

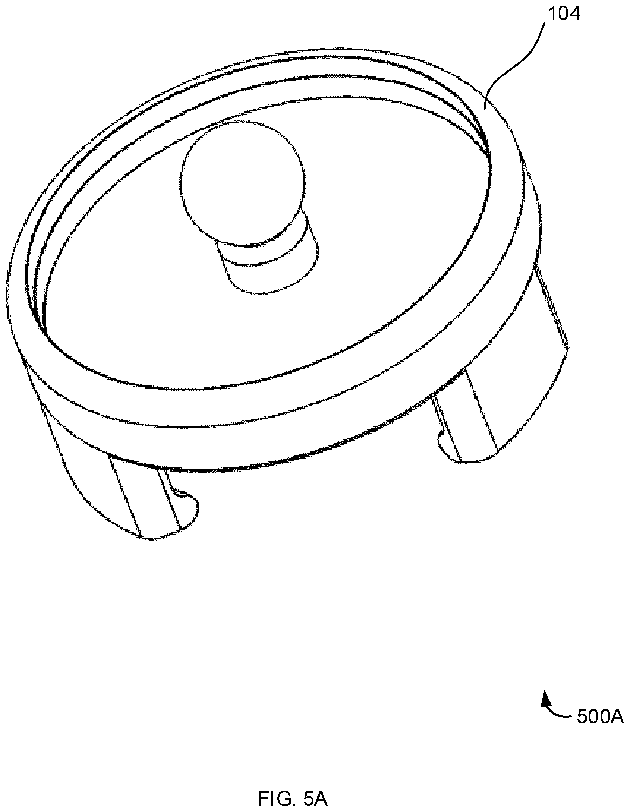

Figure 5A is an exemplary depiction of the top perspective view 500A of a base clip 104. As depicted in the figure, the top portion of the base clip 104 may comprise a notch that extends outwards from the central portion of the base clip 104. The top end of the notch may further be provided with a spherical contact point. The spherical contact point may act as a pivot point that connects the finger pad 108 to the base clip 104. The spherical shape of this contact point may allow the finger pad 108 to freely rotate or tilt about an axis while being loosely locked onto the base clip 104. That is, the finger pad 108 may be tilted to a plurality of angles without dislodging the locking mechanism. Figures 5A, 5B, 6A, 6B, 8 and 9 provide a deeper understanding of this locking mechanism.

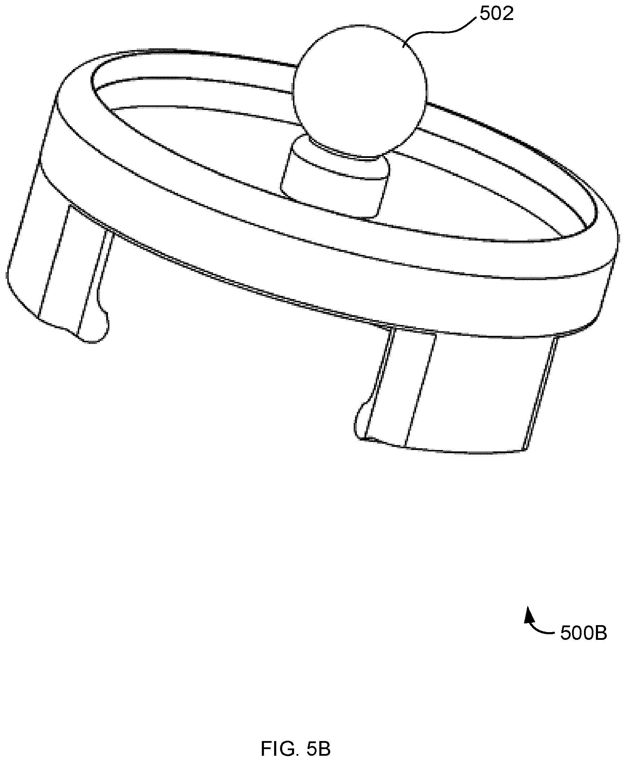

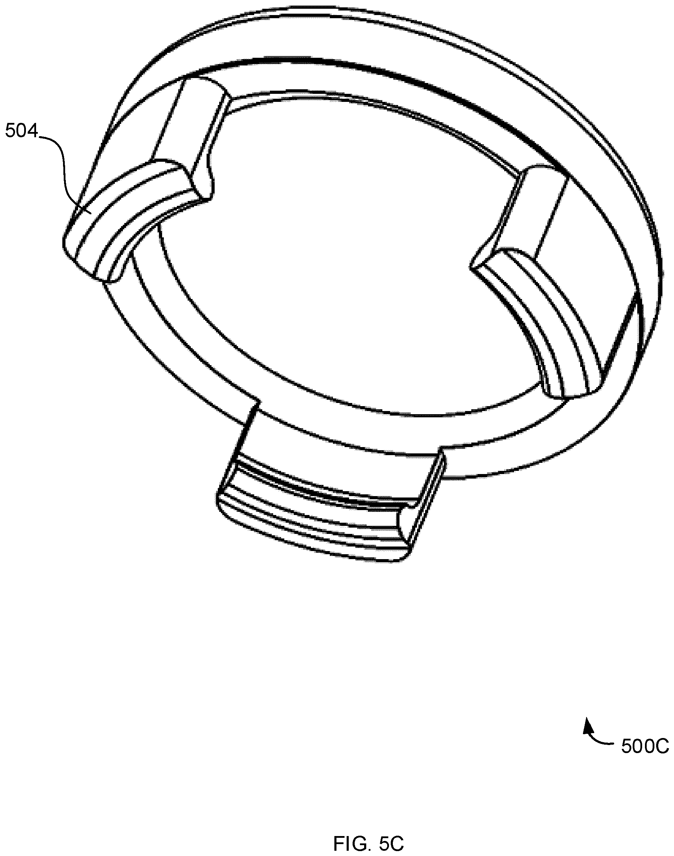

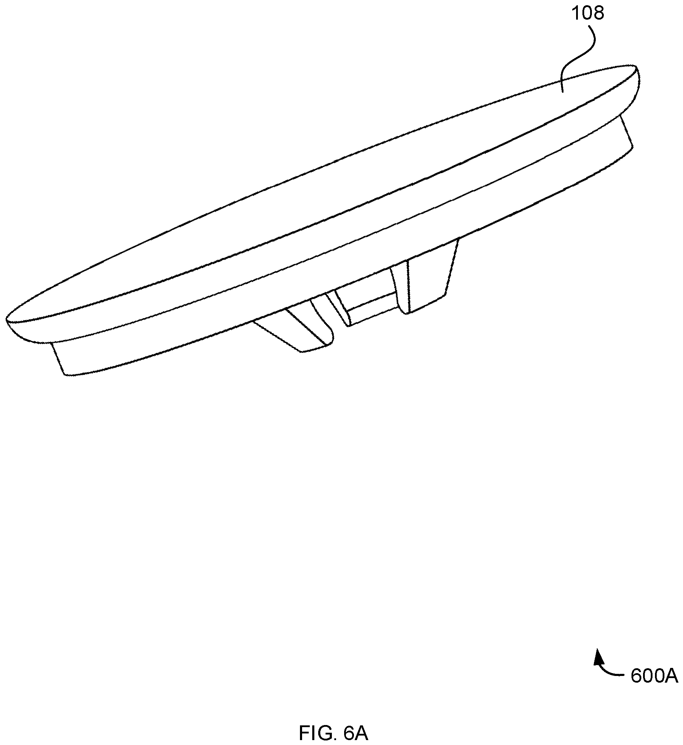

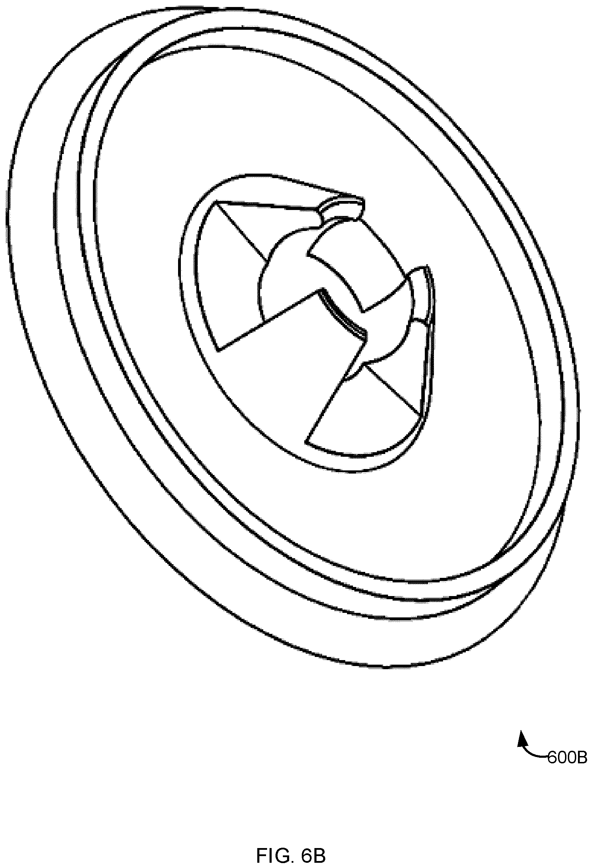

Figure 5B is another exemplary depiction of the top perspective view 500B of the base clip 104 illustrating the spherical contact 502 that connects to a pivotable connector provided at the bottom side of the finger pad 108. The locking mechanism between the spherical contact 502 and the pivotable connector will be explained in more detail after referring to figures 6A and 6B. Figure 5C is an exemplary depiction of the bottom perspective view 500C of the base clip 104. The bottom side of the base clip 104 comprises a first connector 504 that removably clips onto the analog stick 102. The first connector 504 locks the accessory to the analog stick 102.

Figure 6A is an exemplary depiction of the top perspective view 600A of a finger pad 108 of the gaming controller accessory and figure 6B is an exemplary depiction of the bottom perspective view 600B of a finger pad 108 of the gaming controller accessory. The top side of the finger pad 108 may further be provided with the gripping surface 106 while the bottom side may be provided with a pivotable connector 602. The pivotable connector 602 may be connected to the spherical contact 502 of the base clip 104. The connection between the base clip 104 and the finger pad 108 maybe necessitated by pivotably locking the spherical contact 502 of the base clip 104 to the pivotable connector 602 of the finger pad 108. This connecting mechanism may allow the finger pad 108 to tilt to a plurality of angles along a central axis that passes through the central point of the finger pad 108 and the base clip 104. The pivotable connector 602 may loosely grip onto the spherical contact 502 to allow this range of motion. The grip may securely hold the spherical contact 502 within the clamps of the pivotable connector 602 while simultaneously allowing the range of motion as describe above.

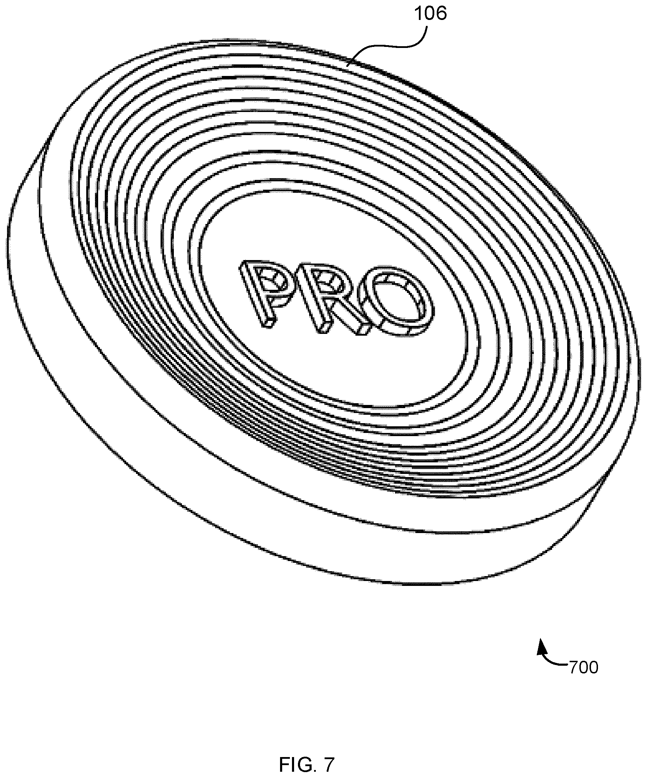

Figure 7 is an exemplary illustration 700 of a gripping surface 106 that is provided on top of the finger pad 108. The gripping surface 106 may enhance the grip provided by the accessory. The gripping material may be manufactured using a rubberized material or other related materials that provide adequate gripping when contacted with the human skin. Additionally, patterns may be embossed or engraved onto the gripping surface 106 to enhance the grip offered. The top side of the gripping surface 106 may cave in at its central point. That is, the edges along the circumference of the gripping surface 106 may have more thickness compared to the central portion.

While the bottom side stays flat, the top side may cave into the central point of the gripping surface 106 thereby providing a concave gripping mechanism. This design may allow the user's thumb 202 to stay fully in contact with the gripping surface 106. The gripping surface 106 may be designed to suit the form factor of a human thumb thereby allowing maximum contact between the gripping surface 106 and the user's thumb 202. With the thumb being in contact with more surface area of the gripping surface 106, the chances of slippage may reduce drastically. Furthermore, the tilting mechanism of the finger pad 108 may be countered by the force provided by the compression device 110. This counteraction makes sure that the thumb 202 may always be in complete contact with the gripping surface 106 of the accessory thereby providing increased control and feedback to the user over the gaming controller.

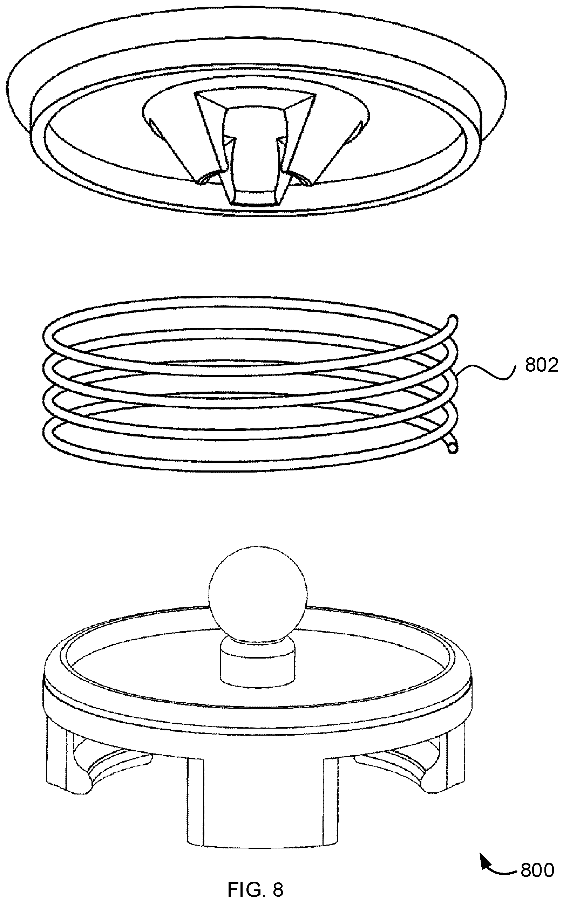

Figure 8 is an exemplary illustration 800 of the order in which the finger pad 108, the compression device (in this example, the compression device is a compression spring 802), and the base clip 104 are to be connected. While the pivotable connection between the finger pad 108 and the base clip 104 may allow a free range of motion for the finger pad 108, the compression spring 802 may introduce a tensile force to counteract this unrestricted movement and provide stability to the entire structure. The compression spring 802 may be disposed between the finger pad 108 and the base clip 104 in such a way that the first end (top end) of the compression spring 802 may be in contact with the edges along the bottom side of the finger pad 108 while the second end (bottom end) of the compression spring 802 may be in contact with the edges along the top side of the base clip 104.

The compression device may be disposed in a compressed state to provide a defined amount of tension between the finger pad 108 and the base clip 104 even when the accessory is not in use. Without the compression device, at least one edge of the finger pad may tilt and touch the base clip. The tension provided by the compression device may avoid this from happening thereby keeping the finger pad 108 and the base clip 104 in a stable horizontal position parallel to each other when no external force is applied. That is, the finger pad 108 may be recentered/reset to its stable horizontal state by the compression device.

When a user applies a pressure on the finger pad 108, the compression device may provide a counterforce thereby making sure that finger pad does not tilt uncontrollably. This counterforce may also make sure that the user's thumb 202 is tightly gripped onto the finger pad 108 even when the finger pad 108 is tilted to various angles. That is, the user's thumb 202 may be in contact with gripping surface 106 throughout the range of motion of the accessory without allowing partial-contact or slippage. This mechanism may allow superior control over the analog stick 102 and enhances the feedback received by the user upon using the gaming accessory. Herein, the user's thumb 202 may undergo concave-shaped movement instead of a convex-shaped movement that would normally happen without the accessory.

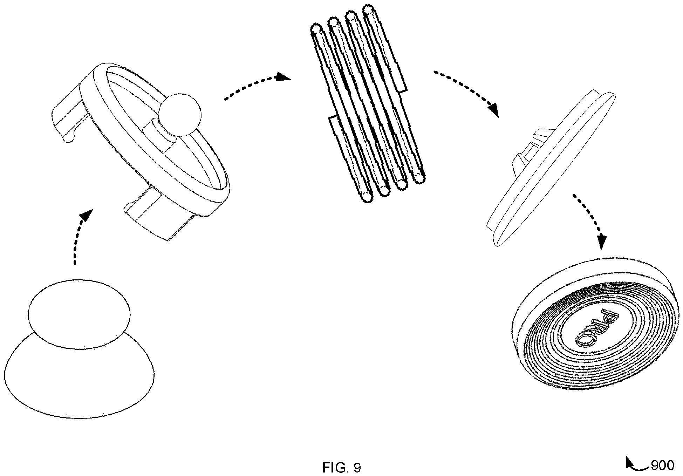

Figure 9 is an exemplary explosive view 900 of the components of the gaming controller accessory. The directions marked by the arrows with dotted tails depict the order in which different components of the accessory are to be connected.

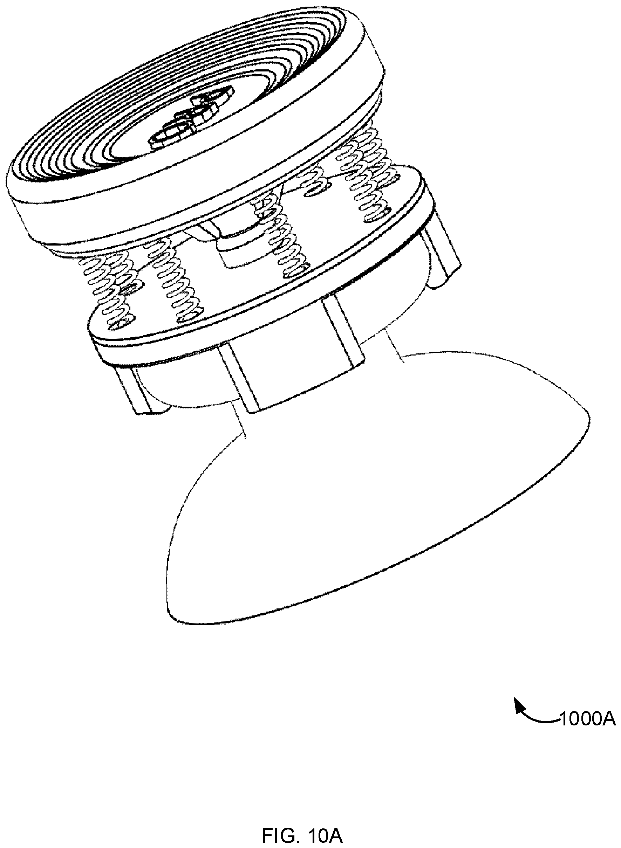

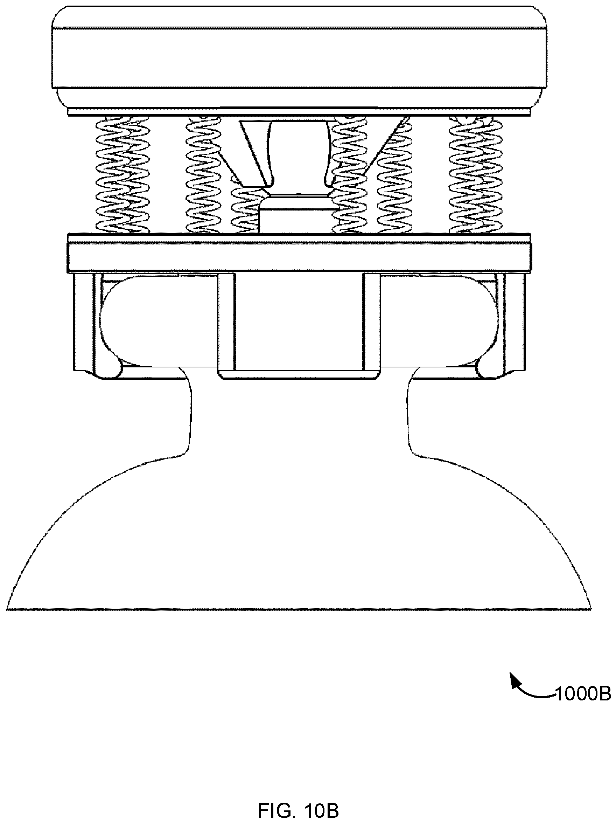

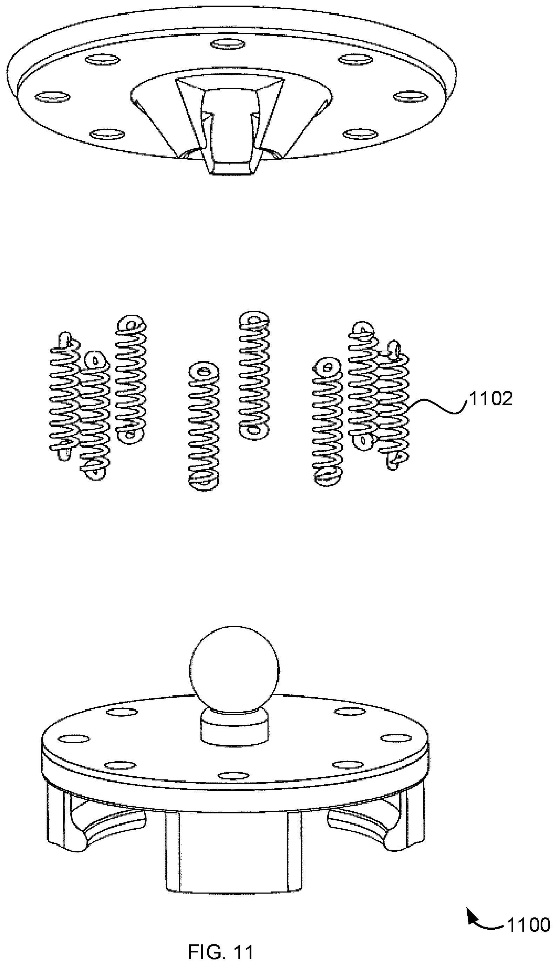

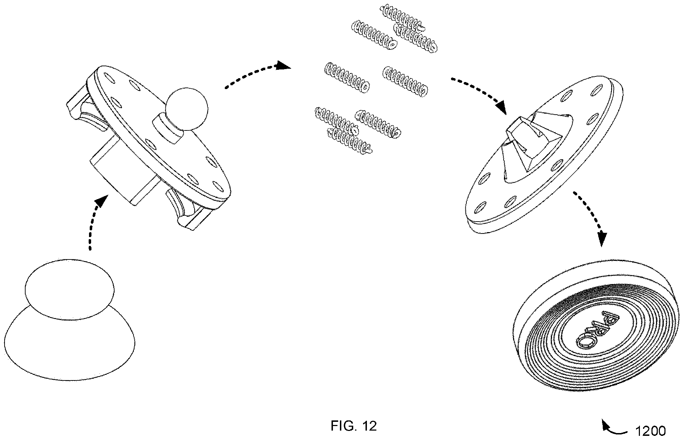

In another example, the finger pad 108 and the base clip 104 may be interfaced using a compressible foam or a set of extension springs. According to the embodiments of the present disclosure, the compression device that provides tension may include a compression spring, one or more extension springs, a compressible foam, or any combination of these devices. In one example, a compression spring may be used. In another example, a compressible foam may be used. In yet another example, extension springs may be used. Alternatively, a combination of these devices may also be used as understood by a person skilled in the art. Accordingly, figures 10A and 10B are an exemplary illustrations 1000A and 1000B of the top perspective view and the side view of the gaming controller accessory wherein extension springs are used as the compression device. Figure 11 is an exemplary illustration 1100 depicting the order in which the finger pad, the extension springs 1102, and the base clip 104 are to be connected. Herein, a plurality of grooves may be provided along the edges of the finger pad 108 at its bottom side onto which the first ends of the extension springs 1102 may be connected. Similarly, a plurality of grooves may be provided along the edges of the base clip 104 at its top side onto which the second ends of the extension springs 1102 may be connected. Accordingly, figure 12 is an exemplary explosive view 1200 of the components of the gaming controller accessory wherein extension springs 1102 are used as compression device.

The configuration of the first connector 504 of the base clip 104 may be adapted to different shapes and dimensions depending upon the shape and dimension of the analog stick 102. The locking mechanism may be varied depending upon the type of the analog stick 102. Hence, the design of the first connector 504 provided herein does not restrict the scope of the present disclosure. In one example, the analog stick 102 may have a square or octagon shape instead of a circular shape. The present disclosure covers all such modifications; the first connector may be adapted to connect with such obvious modifications as understood by a person skilled in the art.

The notch that extends outwards from the top central portion of the base clip 104 and the spherical contact 502 provided on the top end of the notch may be fixed in nature, that is, the spherical contact 502 may not move or rotate. The base clip 104 may also be fixed in nature once clipped onto the analog stick 102. On the other hand, the finger pad 108 may pivot/tilt to a plurality of angles with respect to the base clip 104.

The components of the apparatus including the base clip 104 and the finger pad 108 may preferably be manufactured using materials such as silicone, rubber, soft plastic, synthetic polymers, fibre, metal, and the like. In one example, the components of the apparatus may be manufactured using materials such as thermoplastic polyurethane (TPU), Acrylonitrile Butadiene Styrene (ABS), and the like. The gripping surface 106 may be manufactured using materials that provide adequate grip when contacted by human skin. In one example, a rubberized material may be used to manufacture the gripping surface 106. In another example, the gripping material may be manufactured using a foam-type material. Properties of the material that may be used in manufacturing the instant apparatus may include but not limited to high abrasion resistance, low-temperature performance, high shear strength, oil and grease resistance.

The accessory provides better ergonomics and tactile feedback to users compared to conventional analog sticks. With better control over conventional analog sticks, the user may be able to achieve high precision movement and aiming while playing a video game. The improved tactile feedback received by the user while using the accessory may further improve the user's mastery and control over the gaming controller. Apart from the advantages related to improved efficiency, the accessory further reduces the chances of wear and tear to the analog sticks of the gaming controller thereby reducing repair and replacement costs.

In one example, the compression device disclosed herein may comprise of either a single compression spring as described in the figures or a combination of individual springs disposed between the base clip 104 and the finger pad 108. The combination of springs may be disposed in different patterns as understood by a person skilled in the art. In one example, the combination of springs may be disposed along the circumference of the base clip 104 wherein the bottom side of each spring is connected to the base clip 104 while the top side is connected to the finger pad 108. A combination of such individual springs may be provided throughout the entire circumference of the base clip 104 and the finger pad 108. The combination of springs here may be disposed in non-circular pattern as well. The compression device herein may be a generic spring, a compression spring or any related type of spring that stores mechanical energy and provides a tensile force between the base clip 104 and the finger pad 108.

In another exemplary embodiment, the compression device may be a foam-type material that may offer a tensile force when disposed between the base clip 104 and the finger pad 108. The foam may be in a compressed state thereby storing mechanical energy similar to that of compression springs. Apart from foam, any other compressible or elastic material (such as rubber-based materials) that can offer a tensile force between the two components may be used as understood by a person skilled in the art. The present disclosure covers all such obvious modifications as understood by a person skilled in the art. In yet another example, a combination of different types of compression devices such as compression springs as well as foam-type compression devices may be used to improve the performance and durability of the accessory.

## Claims

1. A gaming controller accessory, comprising:
a base clip (104) removably mountable on an analog stick (102) of a gaming controller;
a finger pad (108) mounted on top of the base clip wherein the finger pad (108) is tiltable to a
plurality of angles with respect to the base clip (104);
a gripping surface (106) fixed on top of the finger pad (108); and
a compression device (110) disposed between the base clip (104) and the finger pad (108), wherein
the compression device (110) provides a tensile force between the base clip (104) and the finger
pad, (108) **characterized in that** the compression device (110) comprises at least one of: a compression spring (802), one or more extension springs (1102), or compressible foam.

2. The gaming controller accessory of claim 1, wherein the first end of the compression spring (802) is in contact with the edges along the bottom side of the finger pad (108) and the second end of the compression spring (802) is in contact with the edges along the top side of the base clip (104).

3. The gaming controller accessory of claim 2, wherein the first ends of the one or more extension springs (1102) are locked into a plurality of grooves provided along edges of the finger pad (108) at its bottom side and the second ends of the one or more extension springs (1102) are locked into a plurality of grooves provided along the edges of the base clip (104) at its top side.

4. The gaming controller accessory of claim 2, wherein the first end of the compressible foam is in contact with the edges along the bottom side of the finger pad (108) and the second end of the compressible foam is in contact with the edges along the top side of the base clip (104).

5. The gaming controller accessory of claim 1, wherein the bottom side of the base clip (104) is removably connected to the gaming controller button using a first connector.

6. The gaming controller accessory of claim 1, wherein the top side of the base clip (104) has a notch extending outward from the central portion of the base clip (104).

7. The gaming controller accessory of claim 6, wherein top end of the notch has a spherical shaped locking component to allow the finger pad (108) to be pivotably mounted on top of the base clip (104).

8. The gaming controller accessory of claim 7, wherein the bottom side of the finger pad (108) has a pivotable connector that latches onto the spherical shaped locking component of the base clip (104).

9. The gaming controller accessory of claim 8, wherein the finger pad (108) can be tilted to a plurality of angles with respect to the base clip (104).

10. The gaming controller accessory of claim 1, wherein the gripping surface (106) has a concave shape on its outer portion where a user's thumb rests while using the accessory.

## Patentansprüche

1. Ein Gaming-Controller-Zubehör, bestehend aus:
einen Basisclip (104) der abnehmbar auf einem Analogstick (102) eines Gaming-Controllers montiert werden kann;
ein Fingerauflage (108), das oben auf dem Basisclip montiert ist, wobei das Fingerauflage (108) in mehrere Winkel neigbar in Bezug auf den Basisclip (104) ist;
eine Grifffläche (106), die oben auf der Fingerauflage (108) befestigt ist; und
eine Kompressionsvorrichtung (110), die zwischen dem Basisclip (104) und der Fingerauflage(108) angeordnet ist, wobei die Kompressionsvorrichtung (110) für eine Zugkraft zwischen dem Basisclip (104) und der Fingerauflage (108) sorgt. Dies ist **gekennzeichnet dadurch dass** die Kompressionsvorrichtung (110) mindestens eines von Folgendem umfasst: eine Druckfeder (802), eine oder mehrere Zugfedern (1102) oder komprimierbaren Schaumstoff.

2. Gaming-Controller-Zubehör nach Anspruch 1, wobei das erste Ende der Druckfeder (802) die Unterseite der Fingerauflage (108) berührt und das zweite Ende der Druckfeder (802) steht in Kontakt mit der Oberseite des Basisclips (104).

3. Gaming-Controller-Zubehör nach Anspruch 2, wobei das erste Ende mit einer oder mehreren Zugfedern (1102) anhand einer Vielzahl von Nuten an den Rändern der Fingerauflage (108) verbunden ist. An der Unterseite und dem zweiten Enden sind eine oder mehreren Zugfedern (1102) anhand einer Vielzahl von Nuten mit dem Basisclip (104) mit der Oberseite verbunden.

4. Gaming-Controller-Zubehör nach Anspruch 2, wobei das erste Ende des Schaumstoffes in Kontakt mit die Kanten entlang der Unterseite des Fingerpolsters (108) ist und das zweite Ende des Schaumstoffes in Kontakt mit der Oberseite des Basisclip (104) ist.

5. Gaming-Controller-Zubehör nach Anspruch 1, wobei die Unterseite des Basisclips (104) über einen ersten Stecker abnehmbar mit der Gaming-Controller-Taste verbunden ist.

6. Gaming-Controller-Zubehör nach Anspruch 1, wobei die Oberseite des Basisclips (104) eine Kerbe hat, die sich vom Mittelteilpunkt des Basisclips (104) nach außen erstreckt.

7. Gaming-Controller-Zubehör nach Anspruch 6, wobei das obere Ende der Kerbe einen kugelförmigen Bestandteil hat, um der Fingerauflage (108) zu ermoeglichen schwenkbar mit dem Basisclips (104) verbunden zu sein.

8. Gaming-Controller-Zubehör nach Anspruch 7, wobei die Unterseite das Fingerpad (108) über eine schwenkbare Verbindung verfügt, der in die kugelförmige Verriegelung des Basisclips (104) einrasten kann.

9. Gaming-Controller-Zubehör nach Anspruch 8, wobei das Fingerpad (108) in eine Vielzahl von Winkeln in Bezug auf den Basisclip (104) geneigt werden kann.

10. Gaming-Controller-Zubehör nach Anspruch 1, wobei die Grifffläche (106) eine konkave Form an der Aussenseite hat, wo der Daumen eines Benutzers ruht, während dieser das Zubehör verwendet.

## Revendications

1. Accessoire de manette de jeux, comprenant :
un clip de base (104) amovible montable sur un joystick (102) d'une manette de jeu;
un coussinet de doigts (108) monté sur le dessus du clip de base, dans lequel le coussinet de doigts (108) est inclinable vers une
pluralité d'angles par rapport au clip de base (104);
une surface de préhension (106) fixée sur le dessus du coussinet de doigts (108) et
un dispositif de compression (110) disposé entre le clip de base (104) et le coussinet des doigts (108), dans lequel
le dispositif de compression (110) fournit une force de traction entre le clip de base (104) et coussinet de doigt (108) **caractérisé en ce que** le dispositif de compression (110) comprend au moins un ressort de compression (802), un ou plusieurs ressorts d'extension (1102) ou de la mousse compressible.

2. L'accessoire de manette de jeu selon la réclamation 1, dans lequel la première extrémité du ressort de compression (802) est en contact avec les bords le long de la face inférieure du coussinet de doigt (108) et la seconde extrémité du ressort de compression (802) est en contact avec les bords le long de la face supérieure du clip de base (104).

3. L'accessoire de manette de jeu selon la réclamation 2, dans lequel les premières extrémités d'un ou plusieurs ressorts d'extension (1102) sont verrouillées dans une pluralité de rainures disposées le long des bords du coussinet de doigt (108) sur sa face inférieure et les secondes extrémités d'un ou de plusieurs ressorts d'extension (1102) sont verrouillées dans une pluralité de rainures disposées le long des bords du clip de base (104) sur sa face supérieure.

4. L'accessoire de manette de jeu selon la réclamation 2, dans lequel la première extrémité de la mousse compressible est en contact avec les bords le long de la face inférieure du coussinet des doigts (108) et la seconde extrémité de la mousse compressible est en contact avec les bords le long de la face supérieure du clip de base (104).

5. L'accessoire de manette de jeu selon la réclamation 1, dans lequel la face inférieure du clip de base (104) est reliée de manière amovible au bouton de la manette de jeu à l'aide d'un premier connecteur.

6. L'accessoire de manette de jeu selon la réclamation 1, dans lequel la face supérieure du clip de base (104) présente une encoche s'étendant vers l'extérieur à partir de la partie centrale du clip de base (104).

7. L'accessoire de manette de jeu selon la réclamation 6, dans lequel l'extrémité supérieure de l'encoche comporte un composant de verrouillage de forme sphérique pour permettre au coussinet de doigt (108) d'être monté de manière pivotante sur le dessus du clip de base (104).

8. L'accessoire de manette de jeu selon la réclamation 7, dans lequel la face inférieure du coussinet de doigt (108) comporte un connecteur pivotant qui s'attache sur le composant de verrouillage de forme sphérique du clip de base (104).

9. L'accessoire de manette de jeu selon la réclamation 8, dans lequel le coussinet de doigt (108) peut être incliné à une pluralité d'angles par rapport au clip de base (104).

10. L'accessoire de manette de jeu selon la réclamation 1, dans lequel la surface de préhension (106) a une forme concave sur sa partie extérieure où le pouce de l'utilisateur repose lors de l'utilisation de l'accessoire.
